# EUROPEAN PATENT SPECIFICATION

(11) **EP 3 119 202 B1**
(45) Date of publication and mention of the grant of the patent: **17.12.2025**
(21) Application number: 15765292.6
(22) Date of filing: 17.03.2015
(51) Int. Cl.: A01N 55/10, A01N 59/00

(54) **METHOD OF CONTROLLING INSECTS IN FOOD AND FOOD COMPRISING INSECTICIDE**
VERFAHREN ZUR BEKÄMPFUNG VON INSEKTEN IN LEBENSMITTEL UND LEBENSMITTELN ENTHALTEND INSEKTIZIDE
PROCEDE DE LUTTE CONTRE LES INSECTES DANS LES ALIMENTS ET ALIMENTS COMPRENANT UN INSECTICIDE

(30) Priority: 18.03.2014 AU 2014900932
(43) Date of publication of application: 25.01.2017
(73) Proprietor: Grains Research & Development Corporation, Barton, Australian Capital Territory 2600 (AU)
(72) Inventor: REN, Yonglin, Kardinya, Western Australia 6163 (AU); AGARWAL, Manjree, Kardinya, West Australia 6163 (AU)
(74) Representative: Script Intellectual Property LLP
(86) International application number: PCT/AU2015/050110
(87) International publication number: WO 2015/139084

(56) References cited:
- US-A- 4 927 635
- US-A- 5 773 017
- GOLOB, P.: "Current Status and Future Perspectives for Inert Dusts for Control of Stored Product Insects", J. STORED PROD. RES., vol. 33, no. 1, 1997, pages 69 - 79, XP055214128
- MCLAUGHLIN, A.: "Laboratory trials on desiccant dust insecticides", PROCEEDINGS OF THE 6TH INTERNATIONAL WORKING CONFERENCE ON STORED-PRODUCT PROTECTION, vol. 2, 1994, pages 638 - 645, XP055225199
- LE PATOUREL, G. N. J. ET AL.: "Toxicity of Amorphous Silicas and Silica-Pyrethroid Mixtures to Tribolium Castaneum (Herbst) (Coleoptera Tenebrionidae", J. STORED PROD. RES., vol. 20, no. 4, 1984, pages 183 - 190, XP055225198
- MUCHA-PELZER, T. ET AL.: "Efficacy of Different Natural and Synthetic Silicas against Two Stored Grain Pests: Sitophilus granarius (L.) and Sitophilus oryzae (L.", ACTA HORT., 2010, pages 311 - 318, XP008184942
- ALEXANDER, P. ET AL.: "Inert dust pesticides: Part III. The effect of dusts on stored products pests other than Calandra granaria", ANNALS OF APPLIED BIOLOGY, vol. 31, no. 2, 1944, pages 156 - 159, XP055225205
- TARSHIS, B.: "Laboratory and Field Studies with Sorptive Dusts for the Control of Arthropods Affecting Man and Annimal", EXPERIMENTAL PARASITOLOGY, vol. 11, 1961, pages 10 - 33, XP026215588

## Description

### Field of the Invention

The present invention relates generally to methods of controlling insects in food. The present invention also relates to solid insecticide formulations and to food products comprising solid insecticide formulations.

### Background to the Invention

Insects can cause serious public health concerns and insect infestations can result in economic loss e.g. food spoilage. Whilst there are various insecticides available many of these are not suitable for widespread application due to toxicity. Furthermore, many insecticides tend to be active against a relatively narrow range of targets and only function optimally under very specific conditions e.g. moisture, humidity and temperature. These factors combined with the ever increasing problem of insecticide resistance means there is a need for new and effective insecticides, particularly those without residue and OH&S issues.

One area where insect infestations are particularly problematic is in relation to stored food. Stored food such as grain and rice are particularly susceptible to insect infestations. Many solid formulation insecticides, e.g. diatomaceous earth (DE) designed for application to stored food, are less than ideal because they need to be applied at relatively high doses and the food often requires treatment to remove the insecticide before food is safe for processing and/or consumption.

With the above in mind there is a need for more effective and economical insectides and methods of treatment.

D1 (US4927635A) discloses a device for controlling stored food insects.

D2 (US5773017A) discloses a diatomaceous earth insecticidal composition.

D3 (GOLOB, P. 1997 J. Stored Prod. Res., vol. 33, no. 1, pages 69 - 79) discloses a review of current status and future perspectives for inert dusts for control of stored product insects.

D4 (MCLAUGHLIN, A. 1994 Proceedings of the 6th International Working Conference on Stored-Product Protection, vol. 2, pages 638 - 645) discloses various laboratory trials on desiccant dust insecticides.

D5 (LE PATOUREL, G. N. J. et al. J. Stored Prod. Res., 1984 vol. 20, no. 4, pages 183 - 190) discloses toxicity of amorphous silicas and silica-pyrethroid mixtures to *Tribolium Castaneum (Herbst) (Coleoptera Tenebrionidae).*

### Summary of the Invention

The present invention provides a_method of controlling insects in stored food comprising the step of contacting said insects with an effective amount of food grade synthetic amorphous silica with an average particle size of 50-200nm and an effective surface area of 185-280m²/g wherein the food grade synthetic amorphous silica comprises at least 98% silica, by weight, and wherein said effective amount is up to 50mg/kg of the stored food and the synthetic amorphous silica is applied to the stored food.

The present invention also provides a food product comprising an amount of a food grade synthetic amorphous silica with an average particle size of 50-200nm and an effective surface area of 185-280m2/g and wherein the food grade synthetic amorphous silica comprises at least 98% silica, by weight and wherein the amount is up to 50mg/kg of the food product.

### Brief Description of Drawings

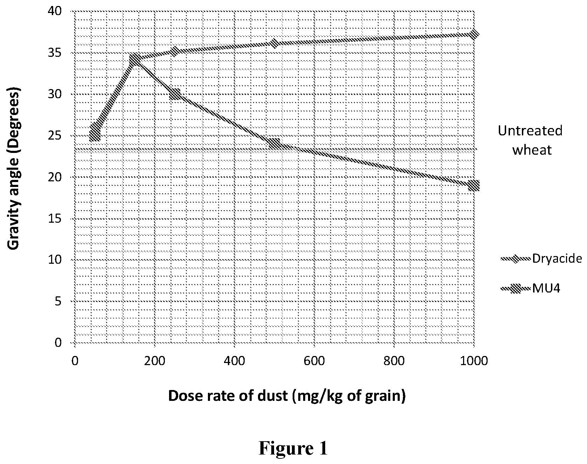

Figure 1 is a graph compares the flow characteristics (gravity angle) of (i) untreated wheat (simple line); (ii) wheat treated with a solid insecticide formulation according to one embodiment of the present invention (square box line); and (iii) wheat treated with an existing commercial formulation (blue diamond line).

### Detailed Description of the Invention

For the purposes of the present invention the term "synthetic" means non-naturally occurring and thus excludes naturally occurring amorphous silica such as diatomaceous earth.

Preferably, the synthetic amorphous silica comprises a solid such as a particulate solid. The synthetic amorphous silica may comprise a dust or powder.

The synthetic amorphous silica is "food grade" insofar as it is suitable for consumption without undue adverse effects. Even more preferably, the synthetic amorphous silica meets at least one of the following food grade certifications: such as Food Chemical Codex (FCC) requirements, the Food and Drugs Administration (FDA) and Australia AICS, Canada CEPA OSL, EU EINECS Number, Japan ENCS and USA TSCA Inventory.

The synthetic amorphous silica comprises at least 98%, or preferably 99%, silica, by weight.

Preferably, the composition excludes contaminants such as alumina, iron oxide, unreacted sodium silicate and/or aluminium salt.

Preferably the synthetic amorphous silica comprises wet silica such as silica gel or precipitated silica. Alternatively, the synthetic amorphous silica is thermal silica such as pyrogenic silica. In another form of the invention, the synthetic amorphous silica is surface treated silica.

Preferably, the synthetic amorphous silica has an average particle size 50-200nm, 100-150nm or 110-120nm.

The synthetic amorphous silica has an effective surface area of 185-280 m²/g.

Preferably, the effective surface area according to the present invention is determined according to the BET technique.

Preferably, the synthetic amorphous silica has an oil absorption value of at least at least 50 ml/100g, 75 ml/100g, 100 ml/100g, 125 ml/100g, 150 ml/100g, 175 ml/100g, 200 ml/100g or 250 ml/100g. In one form of the invention the synthetic amorphous silica has an oil absorption value of 290-320 ml100/g.

Preferably, the synthetic amorphous silica is adapted to generate a net negative charge on a substance to which it is applied. Preferably, the net negative charge is at least -0.003 - -0.1. In one form of the invention the net negative charge is at least -0.09, -0.08, -0.07, -0.05, -0.025 or -0.01.

Preferably, the synthetic amorphous silica is adapted not to impact on the density of a substance to which it is applied. Even more preferably, the synthetic amorphous silica is adapted not to reduce the density of a substance to which it is applied.

Preferably, the synthetic amorphous silica has a dose dependent affect on gravity angle when applied to a substance. Preferably, at doses of greater than about 150mg/kg, the synthetic amorphous silica is adapted to decrease the gravity angle.

The methods of the present invention can be used to control a range of insects.

Preferably, the insect is a beetle. Even more preferably, the insect is an insect belonging to the order Coleoptera and/or the suborder Polyphaga. Even more preferably, the insect belongs to a family selected from the list of families comprising: Terebrionidae; Bostrichidae; Curculionidae; Laemophloeidae; Anobiidae and Silvanidae. In one particular form of the invention the insect belongs to a genus selected from the list of genera comprising: *Tribolium, Rhyzopertha, Sitophilus, Lasioderma, Oryzaephilus, Trogoderma, Psocoptera, Bruchus, Oryzaephilus, Blatta, Periplaneta* and *Cryptolestes.*

For the purposes of the present invention the term "insect(s)" is taken to include related pests such as arachnids including mites and spiders. Similarly, the term "insecticide" extends to agents that are active against these other pests that are not strictly insects. The insect may be a psocid belonging to the order Psocoptera or a moth such as an insect belonging to the order Lepidoptera and/or the suborder Gelechiidae, Tineidae, Galleriidae, Phycitidae and Pyralidae. Even more preferably, the insect belongs to a family selected from the list of families comprising: Sitotroga, Tinae, Aphomia, Plodia, Ephestia and Pyralis. In one particular form of the invention the insect belongs to a genus selected from the list of genera comprising: *Sitotroga cerealella, Tinae tugurialis, Aphomia gularis, Plodia interpunctella, Ephestia cautella, Pyralis pictalis and Aglossa dimidiate.*

Preferably, the effective amount is 10g/tonne of food.

The stored food may be varied and includes a food selected from the group comprising: grain such as wheat, barley, oats, pulse; oilseed such as canola, safflower and peanut; processed food such as polished rice, brown rice and pet food; nuts and dried fruit.

The stored food may be housed in a silo or some other bulk storage device or facility such a bunker, warehouse or a room. Alternatively, the stored food may be bagged.

The silica can be applied during loading of the food by mixing with bulk material such as grain. Alternatively, the silica can be mixed with the bulk material *in situ* while the bulk material is in storage. Another mode of application is to blow or otherwise aerate the bulk material with the silica. When the silica is aerated through the bulk material it may be suspended in a carrier fluid, such as air, nitrogen, carbon dioxide or fumigant gas.

According to a second aspect of the present invention, there is provided a solid insecticide formulation comprising an effective amount of synthetic amorphous silica.

The synthetic amorphous silica is "food grade" insofar as it is suitable for consumption without undue adverse effects. Even more preferably, the synthetic amorphous silica meets at least one of the following food grade certifications: such as Food Chemical Codex (FCC) requirements, the Food and Drugs Administration (FDA) and Australia AICS, Canada CEPA OSL, EU EINECS Number, Japan ENCS and USA TSCA Inventory.

The synthetic amorphous silica may comprise at least 30%-99% of the formulation.

Preferably, the synthetic amorphous silica is the only insecticide in the formulation. Thus, the present invention also provides a solid insecticide formulation consisting essentially of an effective amount of synthetic amorphous silica.

The solid insecticide formulation may comprise one or more of the following components: inert carrier(s), surface active agent(s) such as a sticker or spreader, stabilizer(s) and/or dye(s) and/or surface modification (hydrophilic or hydrophobic) and/or slurry. The solid insecticide formulation may also be suspended in a carrier fluid, such as air, nitrogen, carbon dioxide or fumigant gas.

Also described is a food comprising an effective amount of synthetic amorphous silica.

Preferably, the effective amount is up to 50 mg/kg of food, preferably up to 25 mg/kg of food, preferably 10 mg/kg of food.

The food may be varied and includes a food selected from the group comprising: grain such as wheat, barley, oats, pulse; oilseed such as canola, safflower and peanut; processed food such as polished rice, brown rice and pet food; nuts and dried fruit.

### General

Those skilled in the art will appreciate that the invention described herein is susceptible to variations and modifications other than those specifically described. The invention includes all such variation and modifications. The invention also includes all of the steps and features referred to or indicated in the specification, individually or collectively and any and all combinations or any two or more of the steps or features.

Each document, reference, patent application or patent cited in this text is expressly incorporated herein in their entirety by reference, which means that it should be read and considered by the reader as part of this text. That the document, reference, patent application or patent cited in this text is not repeated in this text is merely for reasons of conciseness. None of the cited material or the information contained in that material should, however be understood to be common general knowledge.

The present invention is not to be limited in scope by any of the specific embodiments described herein. These embodiments are intended for the purpose of exemplification only. Functionally equivalent products and methods are clearly within the scope of the invention as described herein.

The invention described herein may include one or more range of values (e.g. size etc). A range of values will be understood to include all values within the range, including the values defining the range, and values adjacent to the range which lead to the same or substantially the same outcome as the values immediately adjacent to that value which defines the boundary to the range, provided such an interpretation does not read on the prior art.

Throughout this specification, unless the context requires otherwise, the word "comprise" or variations such as "comprises" or "comprising", will be understood to imply the inclusion of a stated integer or group of integers but not the exclusion of any other integer or group of integers.

Other definitions for selected terms used herein may be found within the detailed description of the invention and apply throughout. Unless otherwise defined, all technical terms used herein have the same meaning as commonly understood to one of ordinary skill in the art to which the invention belongs.

### Description of the Preferred Embodiments/Examples

The present invention now will be described more fully hereinafter with reference to the accompanying examples, in which preferred embodiments of the invention are described. This invention may, however, be embodied in many different forms and should not be construed as limited to the embodiments set forth herein; rather, these embodiments are provided so that this disclosure will be thorough and complete, and will fully convey the scope of the invention to those skilled in the art.

The foregoing is illustrative of the present invention and is not to be construed as limiting thereof. Although a number of exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims.

### Example 1 - Amorphous Silica Dusts

### 1. Materials/Methods

### 1.1 Dusts

Basic reference (source) details of the dusts used in the examples are summarised in Table 1.

**Table 1 - Basic reference and source details of dusts**

| **Dust Identifier** | | **Made from** | **Processing methods** |
|---|---|---|---|
| MU1 | n/a¹ | sodium silicate (water glass) | Wet² synthesis/e |
| MU2 | Pirosil PS 300 | sodium silicate (water glass) | Wet synthesis/e |
| MU3 | Pirosil AS-70A | sodium silicate (water glass) | Wet synthesis/e |
| MU4 | Pirosil PS 200 | sodium silicate (water glass) | Wet synthesis/e |
| MU5 | Pirosil AS 100A | sodium silicate (water glass) | Wet synthesis/e |
| MU6 | n/a¹ | sodium silicate (water glass) | Wet/Thermal³ synthesis/e |
| MU7 | BT-30 | sodium silicate (water glass) | Wet/Thermal synthesis/e |
| MU8 | BT-40A | sodium silicate (water glass) | Wet/Thermal synthesis/e |
| MU9 | BT-386 | sodium silicate (water glass) | Wet/Thermal synthesis/e and surface modified |
| MU10 | Dryacide | Crude ore diatomaceous earth | See note⁴ |
| MU11 | Absorbacide | Crude ore diatomaceous earth | See note⁴ |
| MU12 | Diafil 610 | Crude ore diatomaceous earth | See note⁴ |
| 1. MU1 and MU6 sourced from Chinese Academy of Grain Science | | | |
| 2. Wet method includes precipitated and/or aerogel method | | | |
| 3. Thermal method includes thermal and/or pyrogenic and/or fumed methods | | | |
| 4. Crude ore diatomaceous earth based dust for control of insect is milled and dried at relatively low temperature or at high temperature (>800°C) in a rotary kiln | | | |

### 1.2 Methods

To better characterise each dust, the electrostatic charges were neutralised using a static gun (Proscitech) and then each dust was adsorbed to sticky carbon tape and photographed using a scanning electron microscope (Phillips XL 20, Eindhoven, Netherlands) at scales of 1um, 500nm and 20nm.

From the 1µm micrograph 4 particle spots were randomly selected and measured for length and breadth. Same or similar spots were measured using the 500nm micrograph. The measurements were converted to nm units using the scale at the base of electron micrograph and means and standard deviations were calculated. Each dust product was analysed in duplicate.

### 2. Results

The dusts in Table 1 were characterised according to a range of parameters (see Table 2).

**Table 2 - Dust Characteristics**

| Dust | Particle Size (nm) | BET surface area⁵ (m²/g) | DBP absorption (ml/100g dust) | Food grade |
|---|---|---|---|---|
| MU1 | <192.9 | 100 | 200 | Yes |
| MU2 | <143.3 | 185 | 300 | Yes |
| MU3 | <131.4 | 80 | 195 | Yes |
| MU4 | <114.2 | 185 | 290 | Yes |
| MU5 | <127.0 | 110 | 210 | Yes |
| MU6 | <140.1 | 100 | 200 | Yes |
| MU7 | <116.4 | 260-280 | 310 | Yes |
| MU8 | <117.8 | ≥260 | 320 | Yes |
| MU9 | <116.8 | 260-280 | 300 | Yes |
| MU10 (Dryacide) | >20,000 | N/A | <50 | No |
| MU11 (Absorbacide) | >20,000 | N/A | <50 | No |
| MU12 (Diafil 610) | >20,000 | 36 | <50 | No |
| 5. BET analysis technique for the measurement of the specific surface area as per S. Brunauer, P. H. Emmett and E. Teller, J. Am. Chem. Soc., 1938, 60, 309" | | | | |

### Example 2 - Efficacy of dusts against pests

### 1. Materials/Methods

### 1.1 Wheat

Wheat with average moisture content 11.3% was treated by storing at -20°C for 1 week and then held at 4°C until the bioassays were established. Before use, the wheat was equilibrated at room temperature (25°C) for 24 hours.

### 1.2 Insects

Products MU1 - MU12 were tested for efficacy against five different stored grain insects in wheat at 20-25°C:
- Cigarette beetle, *Lasioderma serricorne* (Strain MUWCB1)
- Rice weevil, *Sitophilus oryzae* (L.) (Strain MUWSO8)
- Lesser grain borer, *Rhyzopertha dominica* (F.) (Strain MUWTC8)
- Rust red flour beetle, *Tribolium castaneum* (Herbst) (Strain MUWRD7)
- Flat grain beetle, *Cryptolestes pusillus* (Strain MUCH1)

The techniques of insect culturing and handling of *T. castaneum* generally followed those described by Winks (1982). The cultures of T. castaneum were established by adding adults (400-500) on a medium (1 kg) comprised of 1 part yeast and 12 parts wholemeal flour milled from Australian soft wheat (Rosella) at 25°C and 65% relative humidity (RH).

Cultures of S. *oryzae* and *L. serricorne* were reared on wheat and bread crumbs respectively at 25°C and 65% relative humidity (RH) by adding adults (400-500) onto the relevant medium (1 kg).

Cultures of C. *pusillus* were reared on medium comprising roasted rolled oats at 25°C and 75% relative humidity (RH).

Cultures of *R. dominica* were reared on medium containing 40 parts wheat and 1 part the wholemeal flour.

Prior to use for rearing, wheat and wholemeal flour were conditioned to 12.5% moisture content and all the food used for culture was treated by freezing at - 20°C for 2 days and then storing at 4°C till further usage.

Adult insects were left on the media for 4-5 weeks at which time there were present representative numbers from each life cycle stage - egg, larva, pupa, and adult.

### 1.3 Bioassay

To prepare the treated wheat, 1.8 kg of wheat was mixed with 270 and 360 mg of dust in a 4 litre glass jar respectively for 150 and 200mg/kg, shaken and rolled for 2-3 mins for thorough mixing, and allowed to settle for 10 mins. From this, 50 g of grain mixed with dust was transferred to individual 120 mL glass jars having approximately 100 adult insects fitted with a plastic screw cap with steel mesh in the centre.

For each species eight replications were set up for each dust.

Controls were untreated wheat with approximately 100 adults only.

For each species with one type of dust, 4 treated and control jars were opened on 5th day for counting live and dead insects and remaining 4 treated and control jars were opened on 10th day for counting live and dead insects.

The live insects from each treatment were transferred to new 120 mL glass bottles containing 50 g untreated wheat and mortality observed for another 5 weeks. The jars with treated wheat were also kept for 5 weeks to check for any emergence.

For the bioassays used to test MU4, MU7, MU8 and MU9 separately, wheat was prepared as above in 4 litre glass jars, but 90 mg of dust was used to prepare the 50 mg/kg treatment and 180 mg was used to prepare the 100 mg/kg treatment.

The remainder of this bioassay used to test MU4, MU7, MU8 and MU9 separately was the same as above, with the exception that live and dead insects were counted on days 7 and 14, and the live insects were returned back to these jars and then re-counted every two weeks until 6 weeks after infestation.

### 2. Results

The bioassay results are set out in Tables 3-6.

**Table 3 - Mortality (%) of five tested species of adult insects at 25°C and dose rate of 150 mg/kg for 5 and 10 days treatment**

| **Dust** | ***T*. *castaneum*** | | ***R. dominica*** | | ***S*. *oryzae*** | | ***L*. *serricorne*** | | ***C*. *pusillus*** | |
|---|---|---|---|---|---|---|---|---|---|---|
| | **5 day** | **10 day** | **5 day** | **10 day** | **5 day** | **10 day** | **5 day** | **10 day** | **5 day** | **10 day** |
| MU1 | 97.9 | 99.3 | 96.9 | 97 | 98.8 | 99.8 | 100 | 100 | 100 | 100 |
| MU2 | 99.8 | 100 | 98.3 | 99.3 | 100 | 100 | 100 | 100 | 100 | 100 |
| MU3 | 90.2 | 98 | 97.7 | 98.4 | 100 | 100 | 100 | 100 | 100 | 100 |
| MU4 | 99.7 | 100 | 99.3 | 100 | 100 | 100 | 100 | 100 | 100 | 100 |
| MU5 | 79.8 | 95.8 | 98.1 | 95.6 | 99.8 | 98.6 | 100 | 100 | 100 | 100 |
| MU6 | 97.9 | 99.3 | 96.9 | 97 | 98.8 | 99.8 | 100 | 100 | 100 | 100 |
| MU7 | 100 | 100 | 99.6 | 100 | 100 | 100 | 100 | 100 | 100 | 100 |
| MU8 | 99.5 | 100 | 99.8 | 100 | 100 | 100 | 100 | 100 | 100 | 100 |
| MU9 | 100 | 100 | 100 | 100 | 100 | 100 | 100 | 100 | 100 | 100 |
| MU10 (Dryacide) | 0.5 | 5.3 | 40.4 | 74.9 | 49.2 | 79.3 | 18.9 | 48.8 | 32.0 | 39.4 |
| MU 11 (Absorbacide) | 1.3 | 7.2 | 35.6 | 68.3 | 51.1 | 77.9 | 27.5 | 50.0 | 27.4 | 41.2 |
| MU 12 (Diafil 610) | 2.7 | 6.9 | 41.7 | 73.6 | 53 | 69.8 | 16.8 | 47.6 | 25.1 | 35.8 |

**Table 4 - Mortality (%) of five tested species of adult insects at 25°C and dose rate of 200 mg/kg for 5 and 10 days treatment**

| **Dust** | ***T*. *castaneum*** | | ***R. dominica*** | | ***S*. *oryzae*** | | ***L*. *serricorne*** | | **C. *pusillus*** | |
|---|---|---|---|---|---|---|---|---|---|---|
| | **5 day** | **10 day** | **5 day** | **10 day** | **5 day** | **10 day** | **5 day** | **10 day** | **5 day** | **10 day** |
| MU1 | 100 | 100 | 100 | 100 | 100 | 100 | 100 | 100 | 100 | 100 |
| MU2 | 100 | 100 | 100 | 100 | 100 | 100 | 100 | 100 | 100 | 100 |
| MU3 | 100 | 100 | 100 | 100 | 100 | 100 | 100 | 100 | 100 | 100 |
| MU4 | 100 | 100 | 100 | 100 | 100 | 100 | 100 | 100 | 100 | 100 |
| MU5 | 100 | 100 | 100 | 100 | 100 | 100 | 100 | 100 | 100 | 100 |
| MU6 | 100 | 100 | 100 | 100 | 100 | 100 | 100 | 100 | 100 | 100 |
| MU7 | 100 | 100 | 100 | 100 | 100 | 100 | 100 | 100 | 100 | 100 |
| MU8 | 100 | 100 | 100 | 100 | 100 | 100 | 100 | 100 | 100 | 100 |
| MU9 | 100 | 100 | 100 | 100 | 100 | 100 | 100 | 100 | 100 | 100 |
| MU10 (Dryacide) | 11 | 15.3 | 39.8 | 67.9 | 42.5 | 68.3 | 28.2 | 48.6 | 31.3 | 43.1 |
| MU 11 (Absorbacide) | 9.7 | 13.1 | 35.7 | 48.2 | 37.1 | 49.6 | 31.0 | 45.9 | 36.1 | 49.9 |
| MU 12 (Diafil 610) | 14.0 | 17.2 | 35.5 | 49.1 | 41.5 | 52.8 | 29.3 | 53.9 | 37.5 | 45.2 |

**Table 5 - Mortality (%) of five tested species of adult insect at 25°C and dose rate of 50 mg/kg for 7 and 14 days treatment**

| **Dust** | ***T*. *castaneum*** | | ***R. dominica*** | | **S. *oryzae*** | | ***L*. *serricorne*** | | ***C. pusillus*** | |
|---|---|---|---|---|---|---|---|---|---|---|
| | **7 day** | **14 day** | **7 day** | **14 day** | **7 day** | **14 day** | **7 day** | **14 day** | **7 day** | **14 day** |
| MU4 | 68.2 | 95.3 | 66.9 | 87.5 | 100 | 100 | 100 | 100 | 100 | 100 |
| MU7 | 92.1 | 99 | 97.2 | 98 | 100 | 100 | 100 | 100 | 100 | 100 |
| MU8 | 59.1 | 85.6 | 97.2 | 99.5 | 96.5 | 100 | 100 | 100 | 100 | 100 |
| MU9 | 70.3 | 88.8 | 97.6 | 99.3 | 93.1 | 99.8 | 100 | 100 | 100 | 100 |

**Table 6 - Mortality (%) of five tested species of adult insects at 25°C and dose rate of 100 mg/kg for 7 and 14 days treatment**

| **Dust** | ***T*. *castaneum*** | | ***R. dominica*** | | **S. *oryzae*** | | ***L*. *serricorne*** | | ***C. pusillus*** | |
|---|---|---|---|---|---|---|---|---|---|---|
| | **7 day** | **14 day** | **7 day** | **14 day** | **7 day** | **14 day** | **7 day** | **14 day** | **7 day** | **14 day** |
| MU4 | 96.9 | 100 | 83.3 | 89.8 | 100 | 100 | 100 | 100 | 100 | 100 |
| MU7 | 98.6 | 100 | 99 | 99.8 | 100 | 100 | 100 | 100 | 100 | 100 |
| MU8 | 91.3 | 99 | 97 | 97.6 | 100 | 100 | 100 | 100 | 100 | 100 |
| MU9 | 93.5 | 99.8 | 100 | 100 | 100 | 100 | 100 | 100 | 100 | 100 |

### Example 3A - Long Term Efficacy of dusts against pests

### 1. Materials/Methods

Further bioassays were conducted at a range of dosage rates over a longer period of time.

The jars were exchanged to 500 mL glass jars and for treatment 12 kg of wheat were placed in a steel pail (capacity 21.5 litre) and 0.6, 1.2 and 1.8 g of dust product was added to achieve 50, 100 and 150 mg/kg treatment, respectively.

After adding dust product the pail was rolled and mixed manually for 5 mins and allowed to settle for half an hour. After half an hour 300 g of treated wheat was transferred to 500 mL bottles with approximately 100 adult insects.

The remainder of this bioassay was the same as for Example 3 except insect counts were made at 45, 90 and 180 days after treatment and there were 3 replicates for each insect/dust treatment. The control was untreated wheat with approximately 100 adult insects.

### 2. Results

The bioassay results are set out in Table 7.

**Table 7- Effect of selected dusts (% mortality) on long term storage (45 and 90 day) protection of grain from five insect species at 25°C and dose rate of 150 mg/kg**

| **Dose of dust** mg/kg | **Insect species** | **MU4** | | | **MU7** | | |
|---|---|---|---|---|---|---|---|
| | | **45 day** | **90 day** | **180 day** | **45 day** | **90 day** | **180 day** |
| **50** | *T. castaneum* | 85.3 | 96.3 | 98.2 | 68.2 | 98.8 | 100 |
| | *S. oryzae* | 72.7 | 65.9 | 86.1 | 66 | 74.4 | 94.6 |
| | *R. dominica* | 29.6 | 41.3 | 64.5 | 31.5 | 58.9 | 75.2 |
| | *L. serricorne* | 99.6 | 100 | 100 | 99.5 | 100 | 100 |
| | C. *pusillus* | 100 | 100 | 100 | 100 | 100 | 100 |
| **100** | *T. castaneum* | 100 | 100 | 100 | 98.9 | 100 | 100 |
| | *S. oryzae* | 90.8 | 82.3 | 93.7 | 87.8 | 81.4 | 91.9 |
| | *R. dominica* | 56.6 | 88.4 | 98.1 | 79.8 | 93.2 | 97.4 |
| | *L. serricorne* | 99.6 | 100 | 100 | 100 | 100 | 100 |
| | *C. pusillus* | 100 | 100 | 100 | 100 | 100 | 100 |
| **150** | *T. castaneum* | 100 | 100 | 100 | 100 | 100 | 100 |
| | *S. oryzae* | 100 | 100 | 100 | 100 | 100 | 100 |
| | *R. dominica* | 100 | 99.6 | 100 | 100 | 98.9 | 100 |
| | *L. serricorne* | 100 | 100 | 100 | 100 | 100 | 100 |
| | *C. pusillus* | 100 | 100 | 100 | 100 | 100 | 100 |

| | | **MU8** | | | **MU9** | | |
|---|---|---|---|---|---|---|---|
| | | **45 day** | **90 day** | **180 day** | **45 day** | **90 day** | **180 day** |
| **50** | *T. castaneum* | 62.8 | 98 | 99.5 | 99.3 | 100 | 100 |
| | *S. oryzae* | 55.1 | 47.6 | 98 | 94.7 | 100 | 100 |
| | *R. dominica* | 26.9 | 51.1 | 75 | 79.1 | 86.3 | 87.2 |
| | *L. serricorne* | 100 | 99.5 | 100 | 97.3 | 100 | 100 |
| | C. *pusillus* | 100 | 100 | 100 | 100 | 100 | 100 |
| **100** | *T. castaneum* | 96.5 | 100 | 100 | 100 | 100 | 100 |
| | *S. oryzae* | 91 | 98.6 | 100 | 99.1 | 100 | 100 |
| | *R. dominica* | 46.9 | 51.1 | 68 | 89.2 | 91.7 | 97.9 |
| | *L. serricorne* | 100 | 100 | 100 | 100 | 100 | 100 |
| | C. *pusillus* | 100 | 100 | 100 | 100 | 100 | 100 |
| **150** | *T. castaneum* | 100 | 100 | 100 | 100 | 100 | 100 |
| | *S. oryzae* | 100 | 100 | 100 | 100 | 100 | 100 |
| | *R. dominica* | 100 | 98.7 | 99.6 | 100 | 100 | 99.9 |
| | *L. serricorne* | 100 | 100 | 100 | 100 | 100 | 100 |
| | C. *pusillus* | 100 | 100 | 100 | 100 | 100 | 100 |

### Example 3B - Long Term Efficacy of dusts against pests (larger scale)

### 1. Materials/Methods

Another bioassay similar to that conducted in Example 4A was undertaken but on a larger scale.

Sixty litre metal drums were used for mixing wheat with dust and 50 litre plastic containers were used as mini-silos for treatment with insects; dosage rates were 150mg/kg.

For treatment, 30 kg of wheat was placed in metal drum (capacity 60 litres) and 4.5 g of dust was added to achieve 150 mg/kg treatment.

After adding dust, the drum was rolled and mixed manually for 5 mins and then let to settle for half an hour. After half an hour, treated wheat (30 kg) was transferred to 50 litre mini-silo with approximately 1000 adult insects.

There were 3 replicates for each insect/dust treatment. The control was untreated wheat with approximately 1000 adult insects. After 6 weeks treatment, insect counting were done.

### 2. Results

The bioassay results are set out in Table 8.

**Table 8 - Larger scale treatment of five species insects at 25°C and dose rate of 150 mg/kg for 6 weeks treatment.**

| **Dust** | **Insect species** | **No. of adults added** | **Dead** | **Alive** | **Mortality (%)** |
|---|---|---|---|---|---|
| **MU4 dust** | *T. castaneum* | 997 | 1005 | 0 | 100 |
| | S. *oryzae* | 980 | 980 | 0 | 100 |
| | *R. dominica* | 989 | 989 | 0 | 100 |
| | *L. serricorne* | 1013 | 1013 | 0 | 100 |
| | C. *pusillus* | 941 | 941 | 0 | 100 |
| **MU7 dust** | *T. castaneum* | 983 | 985 | 0 | 100 |
| | S. *oryzae* | 995 | 1003 | 0 | 100 |
| | *R. dominica* | 1001 | 1001 | 0 | 100 |
| | *L. serricorne* | 975 | 975 | 0 | 100 |
| | C. *pusillus* | 803 | 803 | 0 | 100 |
| **MU8 dust** | *T. castaneum* | 996 | 998 | 0 | 100 |
| | S. *oryzae* | 957 | 958 | 0 | 100 |
| | *R. dominica* | 981 | 982 | 0 | 100 |
| | *L. serricorne* | 1002 | 1002 | 0 | 100 |
| | C. *pusillus* | 795 | 795 | 0 | 100 |
| **MU9 dust** | *T. castaneum* | 1010 | 1010 | 0 | 100 |
| | S. *oryzae* | 991 | 991 | 0 | 100 |
| | *R. dominica* | 996 | 1001 | 0 | 100 |
| | *L. serricorne* | 1000 | 1000 | 0 | 100 |
| | C. *pusillus* | 863 | 863 | 0 | 100 |
| **Control** | *T. castaneum* | 990 | 8 | 1907 | - |
| | S. *oryzae* | 1521 | 184 | 2324 | - |
| | *R. dominica* | 869 | 51 | 1870 | - |
| | *L. serricorne* | 997 | 879 | 1425 | - |
| | C. *pusillus* | 1308 | 53 | 2563 | - |

### Example 4 - Dust effect on density, gravity angles and charge

### 1. Materials/Methods

Thirty-four (34) kg wheat mixed with dust product at a dose rate of 150 mg/kg for MU3, MU4, MU7, MU8, MU9, Dryacide, Absorbacide and Diafil610 (5.1 g dust) separately. The 34 kg treated wheat sample was divided into two lots of 17 kg.

A cone based drum (17 litre capacity) fitted with a plate to block the orifice at the base suspended on an iron frame was used to assess grain flow.

An ES111 Digital Static Charge Meter (Coulomb Meter) (ESDEMC Technology, MO, 65401 USA) was used for measurement of electrical charges.

Each 17 kg treated and untreated (control) was allowed to fall freely from the funnel at a certain height to a circular tray.

Three lots of grain samples were taken after treatment and after each drop, to measure angles and electrical charge in triplicate. After finishing the first drop, the wheat was collected then other two more drops were done.

Bulk grain density was measured using an EASI-WAY Hectolitre Test Weight Kit. The wheat sample is dropped down a stainless steel chondrometer under the restriction of a falling weight. The measurement meets international standard ISO 7971-3.

### 2. Results

Tables 9, 10 and 11 provide the results in relation to the effect of the dusts on electrical charge, bulk grain density and gravity angles, respectively. Figure 1 illustrates the dose effect of MU4 and MU10 (Dryacide) on gravity angle.

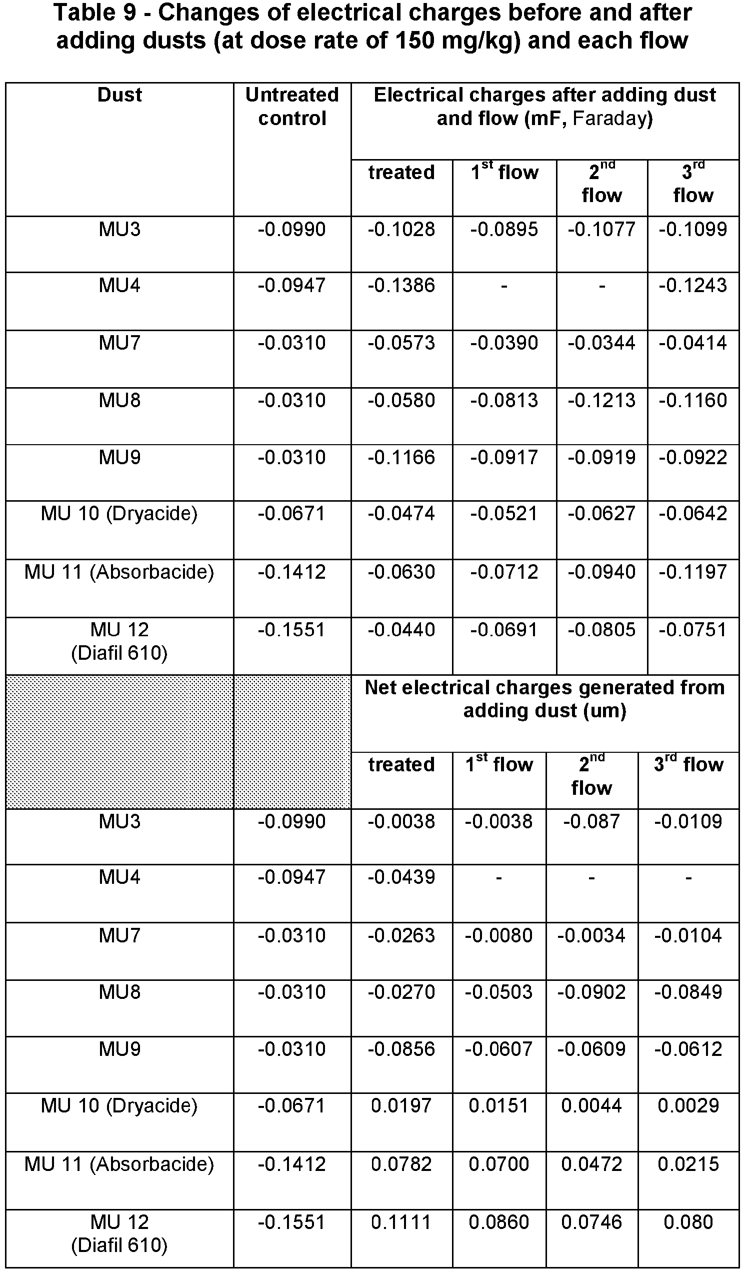

**Table 10 - Changes of bulk density before and after adding dusts (at dose rate of 150 mg/kg) and each flow**

| **Dust** | **Bulk density after adding dust (kg/L)** | | | | ***SD between three falls (%)** |
|---|---|---|---|---|---|
| | **1^{st} flow** | **2^{nd} flow** | **3^{rd} flow** | **Average** | |
| MU3 | 0.7258 | 0.73 | 0.7261 | 0.7273 | 0.32 |
| MU4 | 0.7301 | 0.7284 | 0.7236 | 0.7274 | 0.47 |
| MU7 | 0.7215 | 0.7288 | 0.7254 | 0.7252 | 0.50 |
| MU8 | 0.7315 | 0.7298 | 0.7257 | 0.7290 | 0.41 |
| MU9 | 0.7259 | 0.7315 | 0.7321 | 0.7298 | 0.47 |
| MU10 (Dryacide) | 0.6782 | 0.6801 | 0.6793 | 0.6792 | 0.14 |
| MU11 (Absorbacide) | 0.6592 | 0.6617 | 0.6701 | 0.6637 | 0.86 |
| MU 12 (Diafil 610) | 0.6814 | 0.6799 | 0.6826 | 0.6813 | 0.20 |
| Untreated control | 0.7315 | 0.7223 | 0.7286 | 0.7275 | 0.65 |

**Table 11 - Changes of gravity angles (degrees) before and after adding dusts (at dose rate of 150 mg/kg) and each flow**

| **Dust** | **Gravity angles after adding dust (°)** | | | | **SD between left and right arms (%)** | **SD between three falls (%)** |
|---|---|---|---|---|---|---|
| | **1^{st} flow** | **2^{nd} flow** | **3^{rd} flow** | **Average** | | |
| MU3 | 33.5994 | 34.9753 | 33.9743 | 34.1830 | 3.22 | 5.46 |
| MU4 | 34.1540 | 34.8794 | 35.6613 | 34.7660 | 4.59 | 4.59 |
| MU7 | 35.0453 | 34.1204 | 35.0740 | 34.7466 | 3.59 | 8.13 |
| MU8 | 34.3149 | 34.8183 | 36.9754 | 35.3695 | 4.04 | 5.72 |
| MU9 | 33.4750 | 35.2832 | 35.4551 | 34.7378 | 4.68 | 9.42 |
| MU10 (Dryacide) | 33.8257 | 33.2004 | 34.7118 | 33.9126 | 4.17 | 5.56 |
| MU11 (Absorbacide) | 31.8941 | 31.3196 | 32.1878 | 31.8005 | 6.18 | 4.72 |
| MU12 (Diafil 610) | 34.0148 | 33.8725 | 33.1106 | 33.666 | 3.81 | 4.86 |
| Untreated control | 23.8616 | 23.32.6 | 24.7021 | 23.9614 | 3.1 | 2.44 |

### Example 5 - Efficacy of dusts against almond pests

### 1. Materials/Methods

### 1.1 Almond

Almonds were taken from a commercially available (retail) brand (Natural Almonds Lucky^{™}; 500g packed) with average moisture content of 9.8%.

Prior to use in bioassays, all almond samples were held at -20°C for 1 week and then stored at 4°C until required for bioassays. Before use all almond samples were allowed to equilibrate at room temperature (25°C) for 24 hours.

### 1.2 Indian meal moth (Plodia interpunctella)

MU4, MU7, MU8 and MU9 were tested for efficacy against Indian meal moth *(Plodia interpunctella)* larvae in almond at 22-24°C:
All Indian meal moth's used in bioassays were a phosphine susceptible strain (PI1) reared and held at the Postharvest Biosecurity and Food Safety, School of Veterinary and Life Sciences, Murdoch University, Australia.

Insects were reared under laboratory mass-rearing conditions in a CT room at 29±1°C and 60±5% r.h. with a standard laboratory diet (S.L.D.) containing white cornmeal (26%), whole wheat flour (23%), glycerol (16%), honey (14%), ground dog meal (10%), brewers' yeast (5%), rolled oats (4%) and wheat germs (2%) for this moth (Silhacek and Miller,1972).

One day old eggs were collected for bioassays.

### 1.3 Treatment

Protocols involved the introduction of 100 individual one day old eggs of both Indian meal moth *(Plodia interpunctella)* and Almond moth *(Cadra cautella)* into 100g almond respectively.

After 2 days of culturing eggs at 27-29°C and 65% RH, larvae emerged which were then treated with doses of 100 and 200 g/tonne respectively of MU4, MU7, MU8, MU9 and a control (no product).

### 2. Results

Almonds were fully protected (no measurable damage) against Indian meal moth (Table 12) and Almond moth (Table 13) using MU8 and MU9 at a dose rate of 100g/tonne and with MU4 and MU7 at a dose of 200g/tonne.

Almonds in the untreated control showed low levels (about 20%) of almond damage after 5 days, reaching full (100% of almonds damaged) damage after 100 days exposure to the two insects.

**Table 12 - Percentage damage of almond kernels by Indian meal moth for 4 SAS dust products, each at two dose rates at 27-29°C and 65% RH storage.**

| SAS/Dust | | 5 days | | 10 day | | 20 days | | 100 days | |
|---|---|---|---|---|---|---|---|---|---|
| | | 100g/t | 200g/t | 100g/t | 200g/t | 100g/t | 200g/t | 100/t | 200g/t |
| MU4 | 1 | 0 | 0 | 0 | 0 | 0 | 0 | 0 | 0 |
| | 2 | 0 | 0 | 3 | 0 | 4 | 0 | 4 | 0 |
| MU7 | 1 | 0 | 0 | 3 | 0 | 3 | 0 | 12 | 0 |
| | 2 | 0 | 0 | 2 | 0 | 3 | 0 | 14 | 0 |
| MU8 | 1 | 0 | 0 | 0 | 0 | 0 | 0 | 0 | 0 |
| | 2 | 0 | 0 | 0 | 0 | 0 | 0 | 0 | 0 |
| MU9 | 1 | 0 | 0 | 0 | 0 | 0 | 0 | 0 | 0 |
| | 2 | 0 | 0 | 0 | 0 | 0 | 0 | 0 | 0 |
| Control | 1 | 19 | 21 | 42 | 44 | 65 | 61 | 100 | 100 |
| | 2 | 20 | 18 | 39 | 46 | 63 | 67 | 100 | 100 |

**Table 13 - Percentage damage of almond kernels by Almond moth for 4 SAS dust products, each at two dose rates**

| SAS/Dust | | 5 days | | 10 day | | 20 days | | 100 days | |
|---|---|---|---|---|---|---|---|---|---|
| | | 100g/t | 200g/t | 100g/t | 200g/t | 100g/t | 200g/t | 100/t | 200g/t |
| MU4 | 1 | 0 | 0 | 0 | 0 | 0 | 0 | 0 | 0 |
| | 2 | 0 | 0 | 0 | 0 | 2 | 0 | 2 | 0 |
| MU7 | 1 | 0 | 0 | 2 | 0 | 2 | 0 | 13 | 0 |
| | 2 | 0 | 0 | 3 | 0 | 3 | 0 | 11 | 0 |
| MU8 | 1 | 0 | 0 | 0 | 0 | 0 | 0 | 0 | 0 |
| | 2 | 0 | 0 | 0 | 0 | 0 | 0 | 0 | 0 |
| MU9 | 1 | 0 | 0 | 0 | 0 | 0 | 0 | 0 | 0 |
| | 2 | 0 | 0 | 0 | 0 | 0 | 0 | 0 | 0 |
| Control | 1 | 21 | 24 | 44 | 48 | 63 | 67 | 100 | 100 |
| | 2 | 18 | 21 | 41 | 43 | 66 | 62 | 100 | 100 |

### Example 6 - Efficacy of dusts against Indian meal moth and Almond moth (Cadra cautella) in stored peanuts

### 1. Materials/Methods

### 1.1 Peanuts

Peanuts were sourced from a commercial (organic retail) 5 kg pack containing peanuts with average moisture content 6.5%.

Prior to use in bioassays peanut samples were held at 20°C for 1 week and then stored at 4°C until the bioassays were established. Before use, the peanuts were thawed at room temperature (25°C) for 24 hours.

### 1.2 Indian meal moth (Plodia interpunctella) and Almond moth (Cadra cautella)

MU4, MU7, MU8 and MU9 were tested for efficacy against Indian meal moth (Plodia interpunctella) and Almond moth (Cadra cautella) larvae in almond at 22-24°C:
Indian meal moth and Almond moth (Cadra cautella) tested were the phosphine susceptible strains PI1 and CC1 held at Postharvest Biosecurity and Food Safety, School of Veterinary and Life Sciences Murdoch University, Australia.

The techniques of insect culturing and handling for Indian meal moth and Almond moth generally follow those described by Silhacek and Miller (1972) using laboratory mass-rearing conditions in a CT room at 29±1°C and 60±5% r.h..

A described standard laboratory diet (S.L.D.) was used comprising white cornmeal (26%), whole wheat flour (23%), glycerol (16%), honey (14%), ground dog meal (10%), brewers' yeast (5%), rolled oats (4%) and wheat germs (2%) for this moth. One day old eggs were collected for bioassays.

### 1.3 Treatment

Protocols involved the introduction of 100 one day old Indian meal moth *(Plodia interpunctella)* and 100 Almond moth *(Cadra cautella)* eggs into 100 g peanuts respectively. The eggs emerged to larvae after 2 days culture at 27-29°C and 65% RH, and were then treated with synthetic amorphous silica (SAS) at a dose of 100 and 200 g/tonne at 27-29°C and 65% RH.

### 2. Results

Peanuts were fully protected (no measurable damage) against Indian meal moth (Table 14) and Almond moth (Table 15) when treated with MU4, MU7, MU8 and MU9 at a dose rate of 100g/tonne. Untreated control peanuts were all damaged after 100days at 27-29°C and 65% RH storage.

**Table 14: Level of damage (%) of peanuts by Indian meal moth**

| **SAS** | | **5 days** | | **10 day** | | **20 days** | | **100 days** | |
|---|---|---|---|---|---|---|---|---|---|
| | | **100/t** | **200g/t** | **100g/t** | **200g/t** | **100g/t** | **200g/t** | **100/t** | **200g/t** |
| MU4 | 1 | 0 | 0 | 0 | 0 | 0 | 0 | 0 | 0 |
| | 2 | 0 | 0 | 0 | 0 | 0 | 0 | 0 | 0 |
| MU7 | 1 | 0 | 0 | 0 | 0 | 0 | 0 | 0 | 0 |
| | 2 | 0 | 0 | 0 | 0 | 0 | 0 | 0 | 0 |
| MU8 | 1 | 0 | 0 | 0 | 0 | 0 | 0 | 0 | 0 |
| | 2 | 0 | 0 | 0 | 0 | 0 | 0 | 0 | 0 |
| MU9 | 1 | 0 | 0 | 0 | 0 | 0 | 0 | 0 | 0 |
| | 2 | 0 | 0 | 0 | 0 | 0 | 0 | 0 | 0 |
| Control | 1 | 11 | 12 | 19 | 24 | 35 | 41 | 100 | 100 |
| | 2 | 10 | 9 | 23 | 22 | 33 | 35 | 100 | 100 |

**Table 15: Level of damage (%) of peanuts by Indian meal moth**

| **SAS** | | **5 days** | | **10 day** | | **20 days** | | **100 days** | |
|---|---|---|---|---|---|---|---|---|---|
| | | **100g/t** | **200g/t** | **100g/t** | **200g/t** | **100g/t** | **200g/t** | **100/t** | **200g/t** |
| MU4 | 1 | 0 | 0 | 0 | 0 | 0 | 0 | 0 | 0 |
| | 2 | 0 | 0 | 0 | 0 | 0 | 0 | 0 | 0 |
| MU7 | 1 | 0 | 0 | 0 | 0 | 0 | 0 | 0 | 0 |
| | 2 | 0 | 0 | 0 | 0 | 0 | 0 | 0 | 0 |
| MU8 | 1 | 0 | 0 | 0 | 0 | 0 | 0 | 0 | 0 |
| | 2 | 0 | 0 | 0 | 0 | 0 | 0 | 0 | 0 |
| MU9 | 1 | 0 | 0 | 0 | 0 | 0 | 0 | 0 | 0 |
| | 2 | 0 | 0 | 0 | 0 | 0 | 0 | 0 | 0 |
| Control | 1 | 9 | 11 | 21 | 19 | 33 | 36 | 100 | 100 |
| | 2 | 12 | 13 | 24 | 23 | 37 | 32 | 100 | 100 |

### Example 7 - Efficacy of dusts against pests in stored peanuts

### 1. Materials/Methods

### 1.1 Peanuts

Peanut samples with average moisture content 6.5% were taken from a retail pack of organic 5 kg packaged peanuts. All peanut samples were held at -20°C for 1 week and then stored at 4°C until the bioassays were established.

Before use all peanut samples were allowed to equilibrate at room temperature (25°C) for 24 hours.

### 1.2 Insects

The tested insect species of *L. serricorne,* S. *oryzae, T. castaneum* and *R*. *dominica* were the phosphine and MB susceptible strains MULS1, MUSO1, MUTC1, MUTV and MURD2 respectively, held at the Post-harvest Plant Biosecurity Laboratory, Murdoch University, Australia.

The techniques of insect culturing and handling of *T. castaneum* generally followed those described by Winks (1982). The cultures of T. castaneum were established by adding adults (400-500) on a medium (1 kg) comprised of 1 part yeast and 12 parts wholemeal flour milled from Australian soft wheat (Rosella) at 25°C and 65% relative humidity (RH).

Cultures of S. *oryzae* and *L. serricorne* were reared on wheat and bread crumbs respectively at 25°C and 65% relative humidity (RH) by adding adults (400-500) onto the relevant medium (1 kg).

Cultures of *R. dominica* were reared on medium containing 40 parts wheat and 1 part the wholemeal flour.

Prior to use for rearing, wheat and wholemeal flour were conditioned to 12.5% moisture content and all the food used for culture was treated by freezing at - 20°C for 2 days and then storing at 4°C till further usage.

Adult insects were left on the media for 4-5 weeks at which time there were present representative numbers from each life cycle stage - egg, larva, pupa, and adult.

### 1.3 Treatment

Protocols involved introduction of 100 adult insects into 100 mL glass bottle containing 30 g peanuts (11.5% moisture content) treated with MU4, MU7, MU8 and MU9 at dose rate of 150 g/tonne and stored at 27-29°C and 65% RH for 7 and 14 days.

### 2. Results

Complete control (100% mortality) was achieved for all tested insects after 14 days (Table 16) with MU4, MU7, MU8 and MU9 at dose of 150g/tonne.

**Table 16 - Mortality (%) of four species of adult insects in stored peanuts**

| **SAS** | **Exposure time (days)** | ***T*. *castaneum*** | ***S*. *oryzae*** | ***R. dominica*** | ***L*. *serricorne*** |
|---|---|---|---|---|---|
| MU4 | 7 | 98 | 100 | 100 | 100 |
| | 14 | 100 | 100 | 100 | 100 |
| MU7 | 7 | 96 | 100 | 100 | 100 |
| | 14 | 100 | 100 | 100 | 100 |
| MU8 | 7 | 100 | 100 | 100 | 100 |
| | 14 | 100 | 100 | 100 | 100 |
| MU9 | 7 | 100 | 100 | 100 | 100 |
| | 14 | 100 | 100 | 100 | 100 |
| Control | 7 | 0 | 2 | 3 | 6 |
| | 14 | 3 | 6 | 5 | 11 |

### Example 8 - Efficacy of dusts against pests in stored sultanas

### 1. Materials/Methods

### 1.1 Sultanas

Sultana samples with average moisture content of 16.6% were taken from a retail package of Natural Sunbeam^{®} Australian Sultanas (1 kg). All sultana samples were held at -20°C for 1 week and then stored at 4°C until the bioassays were established. Before use, the sultanas were thawed at room temperature (25°C) for 24 hours.

### 1.2 Indian meal moth (Plodia interpunctella)

MU4, MU7, MU8 and MU9 were tested for efficacy against Indian meal moth (Plodia interpunctella) larvae in sultanas at 22-24°C:
Indian meal moth tested were the phosphine susceptible strains PI1 held at Postharvest Biosecurity and Food Safety, School of Veterinary and Life Sciences Murdoch University, Australia.

The techniques of insect culturing and handling generally follow those described by Silhacek and Miller (1972) and used laboratory mass-rearing conditions in a CT room at 29±1°C and 60±5% r.h. with a described standard laboratory diet (S.L.D.) containing white cornmeal (26%), whole wheat flour (23%), glycerol (16%), honey (14%), ground dog meal (10%), brewers' yeast (5%), rolled oats (4%) and wheat germs (2%) for this moth. One day old eggs were collected for bioassays.

### 1.3 Treatment

Protocols involved introducing 100 one day old Indian meal moth *(Plodia interpunctella)* eggs into 100 g sultanas. The eggs were emerged to larvae after 2 days culture at 27-29°C and 65% RH, and then treated with four dust products at dose rates of 100 and 200 g/tonne at 27-29°C and 65% RH.

### 2. Results

Sultanas were fully protected (no measurable damage) against Indian meal moth treated with MU8 and MU9 at dose rates of 100g/tonne and with MU4 and MU7 at dose rates of 200g/tonne.

Untreated control sultanas were all damaged after 100days at 27-29°C and 65% RH storage.

**Table 17 - Level of damage (%) of sultanas by Indian meal moth**

| **SAS** | | **5 days** | | **10 day** | | **20 days** | | **100 days** | |
|---|---|---|---|---|---|---|---|---|---|
| | | **100g/t** | **200g/t** | **100g/t** | **200g/t** | **100g/t** | **200g/t** | **100g/t** | **200g/t** |
| MU4 | 1 | 0 | 0 | 0 | 0 | 0 | 0 | 0 | 0 |
| | 2 | 1 | 0 | 1 | 0 | 1 | 0 | 1 | 0 |
| MU7 | 1 | 0 | 0 | 0 | 0 | 0 | 0 | 0 | 0 |
| | 2 | 2 | 0 | 2 | 0 | 2 | 0 | 2 | 0 |
| MU8 | 1 | 0 | 0 | 0 | 0 | 0 | 0 | 0 | 0 |
| | 2 | 0 | 0 | 0 | 0 | 0 | 0 | 0 | 0 |
| MU9 | 1 | 0 | 0 | 0 | 0 | 0 | 0 | 0 | 0 |
| | 2 | 0 | 0 | 0 | 0 | 0 | 0 | 0 | 0 |
| Control | 1 | 5 | 4 | 13 | 11 | 29 | 23 | 64 | 57 |
| | 2 | 6 | 7 | 10 | 14 | 25 | 27 | 58 | 60 |

### Example 9 - Efficacy of dusts against pests in stored rice

### 1. Materials/Methods

### 1.1 Polished rice

Polished rice samples with average moisture content 12.6% were taken from a retail brand of rice, SUNRICE^{®} Long Grain white rice (5 kg).

All rice samples were held at -20°C for 1 week and then stored at 4°C until the bioassays were established. Before use the rice samples were equilibrated at room temperature (25°C) for 24 hours.

### 1.2 Insects

The tested insect species of *L. serricorne,* S. *oryzae, T. castaneum* and *R*. *dominica* were the phosphine and MB susceptible strains MULS1, MUSO1, MUTC1, MUTV and MURD2 respectively, held at the Post-harvest Plant Biosecurity Laboratory, Murdoch University, Australia.

The techniques of insect culturing and handling of *T. castaneum* generally followed those described by Winks (1982). The cultures of *T. castaneum* were established by adding adults (400-500) on a medium (1 kg) comprised of 1 part yeast and 12 parts wholemeal flour milled from Australian soft wheat (Rosella) at 25°C and 65% relative humidity (RH).

Cultures of S. *oryzae* and *L. serricorne* were reared on wheat and bread crumbs respectively at 25°C and 65% relative humidity (RH) by adding adults (400-500) onto the relevant medium (1 kg).

Cultures of *R. dominica* were reared on medium containing 40 parts wheat and 1 part the wholemeal flour.

Prior to use for rearing, wheat and wholemeal flour were conditioned to 12.5% moisture content and all the food used for culture was treated by freezing at - 20°C for 2 days and then storing at 4°C till further usage.

Adult insects were left on the media for 4-5 weeks at which time there were present representative numbers from each life cycle stage - egg, larva, pupa, and adult.

### 1.3 Treatment

Protocols involved introducing 100 adult insects of four beetle species each into a 100 mL glass bottle containing 30 g polished rice (12.5% moisture content) treated with MU4, MU7, MU8 and MU9 at dose rate of 150 g/tonne and stored at 27-29°C and 65% RH for 7 and 14 days.

### 2. Results

Complete control (100% mortality) was achieved for three insect treatments (S. *oryzae, R. dominica and L. serricorne;* Table 18) with MU4, MU7, MU8 and MU9 at dose of 150g/tonne for 7 and 14 days. MU8 and MU9 provided complete control (100% mortality) against *T. castaneum;* mortality was 82-84% and 98-99% for MU4 and MU7 products respectively for 7 and 14 days exposure.

**Table 18: Mortality (%) of four species of (adult) insects in stored rice**

| **SAS** | **Exposure time (days)** | ***T*. *castaneum*** | ***S. oryzae*** | ***R. dominica*** | ***L*. *serricorne*** |
|---|---|---|---|---|---|
| MU4 | 7 | 84 | 100 | 100 | 100 |
| | 14 | 98 | 100 | 100 | 100 |
| MU7 | 7 | 82 | 100 | 100 | 100 |
| | 14 | 99 | 100 | 100 | 100 |
| MU8 | 7 | 100 | 100 | 100 | 100 |
| | 14 | 100 | 100 | 100 | 100 |
| MU9 | 7 | 100 | 100 | 100 | 100 |
| | 14 | 100 | 100 | 100 | 100 |
| Control | 7 | 0 | 0 | 2 | 8 |
| | 14 | 1 | 2 | 6 | 12 |

### Example 10 - Efficacy of dusts against pests in stored pet food

### 1. Materials/Methods

### 1.1 Pet food

Pet food samples with average moisture content 8.6% were obtained from a retail dog food, ROYAL CANIN^{®} NAXI Adult large Dogs (1 kg).

All pet food samples were held at -20°C for 1 week and then stored at 4°C until the bioassays were established. Before use, the pet food was equilibrated at room temperature (25°C) for 24 hours.

### 1.2 Insects

The tested insect species of *L. serricorne,* S. *oryzae, T. castaneum* and R. *dominica* were the phosphine and MB susceptible strains MULS1, MUSO1, MUTC1, MUTV and MURD2 respectively, held at the Post-harvest Plant Biosecurity Laboratory, Murdoch University, Australia.

The techniques of insect culturing and handling of *T. castaneum* generally followed those described by Winks (1982). The cultures of *T. castaneum* were established by adding adults (400-500) on a medium (1 kg) comprised of 1 part yeast and 12 parts wholemeal flour milled from Australian soft wheat (Rosella) at 25°C and 65% relative humidity (RH).

Cultures of S. *oryzae* and *L. serricorne* were reared on wheat and bread crumbs respectively at 25°C and 65% relative humidity (RH) by adding adults (400-500) onto the relevant medium (1 kg).

Cultures of *R. dominica* were reared on medium containing 40 parts wheat and 1 part the wholemeal flour.

Prior to use for rearing, wheat and wholemeal flour were conditioned to 12.5% moisture content and all the food used for culture was treated by freezing at - 20°C for 2 days and then storing at 4°C till further usage.

Adult insects were left on the media for 4-5 weeks at which time there were present representative numbers from each life cycle stage - egg, larva, pupa, and adult.

### 1.3 Treatment

Protocols involved introducing 100 adult insects of four species into 100 mL glass bottle containing 30 g pet food (12.5% moisture content) treated with MU4, MU7, MU8 and MU9 at dose rate of 150 g/tonne and stored at 27-29°C and 65% RH for 7 and 14 days.

### 2. Results

Table 19 provides the results. Complete control (100% mortality) was achieved for three of the four tested insect species *(S. oryzae* and *R. dominica* and L. *serricorne)* with MU4, MU7, MU8 and MU9 at dose of 150g/tonne for 7 and 14 days (Table 8). *T. castaneum* mortality was 74-76% and 83-87% for MU4 and MU7 respectively for 7 and 14 days exposure.

**Table 19: Mortality of four species adult insects in stored pet food**

| **SAS** | **Exposure time (days)** | **T. *castaneum*** | **S. *oryzae*** | ***R. dominica*** | **L. *serricorne*** |
|---|---|---|---|---|---|
| MU4 | 7 | 76 | 100 | 100 | 100 |
| | 14 | 87 | 100 | 100 | 100 |
| MU7 | 7 | 74 | 100 | 100 | 100 |
| | 14 | 83 | 100 | 100 | 100 |
| MU8 | 7 | 100 | 100 | 100 | 100 |
| | 14 | 100 | 100 | 100 | 100 |
| MU9 | 7 | 100 | 100 | 100 | 100 |
| | 14 | 100 | 100 | 100 | 100 |
| Control | 7 | 0 | 2 | 3 | 7 |
| | 14 | 3 | 4 | 7 | 14 |

### Example 11 - Efficacy of dusts against Australian wild ants

### 1. Materials/Methods

### 1.1 Ants

Wild ants were collected from Murdoch University campus and identified as Bulldog ant *(Myrmecia pyriformis).* The collected ants were stored in 150 mL glass jars with each jar containing 10 ants. The ants were treated after 1 hour of collection.

### 1.2 Treatment

Protocols involved introducing 10 adult ants onto a glass petri dish, 12 cm diameter. Each dish was treated with one of four dust products each at two application rates of 2 and 4 g/m².

### 2. Results

Complete control (100% mortality) was achieved for MU4, MU7, MU8 and MU9 after ants had been exposed for 30 minutes at either application rate. All three controls (no SAS product) resulted in complete control failure (0% mortality) after 30 minutes exposure.

**Table 20 - Mortality (%) of Australian wild ants treated with SAS/dust**

| **SAS** | | **10 min** | | **30 min** | |
|---|---|---|---|---|---|
| | | **2g/m²** | **4g/m²** | **2g/m²** | **4g/m²** |
| MU4 | 1 | 0 | 0 | 100 | 100 |
| | 2 | 0 | 0 | 100 | 100 |
| | 3 | 0 | 0 | 100 | 100 |
| MU7 | 1 | 0 | 0 | 100 | 100 |
| | 2 | 0 | 0 | 100 | 100 |
| | 3 | 0 | 0 | 100 | 100 |
| MU8 | 1 | 0 | 0 | 100 | 100 |
| | 2 | 0 | 0 | 100 | 100 |
| | 3 | 0 | 0 | 100 | 100 |
| MU9 | 1 | 0 | 0 | 100 | 100 |
| | 2 | 0 | 0 | 100 | 100 |
| | 3 | 0 | 0 | 100 | 100 |
| Control | 1 | 0 | 0 | 0 | 0 |
| | 2 | 0 | 0 | 0 | 0 |
| | 3 | 0 | 0 | 0 | 0 |

### Example 12 - Efficacy of field application of dusts against stored grain insects

### 1. Materials/Methods

### 1.1 Wheat

Wheat used was Australian Standard White (ASW) with moisture content of 11.3%.

### 1.2 Insects

The tested insect species of S. *oryzae* and *R. dominica* were the phosphine and MB susceptible strains MULS1 and MURD2 respectively, held at the Post-harvest Plant Biosecurity Laboratory, Murdoch University, Australia.

Cultures of S. *oryzae* were reared on wheat and bread crumbs respectively at 25°C and 65% relative humidity (RH) by adding adults (400-500) onto the relevant medium (1 kg).

Cultures of *R. dominica* were reared on medium containing 40 parts wheat and 1 part wholemeal flour.

Prior to use for rearing, wheat and wholemeal flour were conditioned to 12.5% moisture content and all the food used for culture was treated by freezing at - 20°C for 2 days and then storing at 4°C till further usage.

Adult insects were left on the media for 4-5 weeks at which time there were present representative numbers from each life cycle stage - egg, larva, pupa, and adult.

### 1.3 Treatment

Eleven (11) tonnes of wheat were admixed with MU8 at a rate of 200 g/tonne (2.2 kg for the 11 tonne bulk wheat), followed by movement of the grain through an auger with the grain pooled as a single pile on the floor of the grain shed.

For laboratory bioassays 96 glass jars (500 mL) were used, with 48 glass jars each containing 380 g of wheat (control) and 48 jars with wheat admixed with dust product.

Adult insect species of *Sitophilus oryzae* and *Rhyzopertha dominica* were introduced into each jar respectively to obtain 3 replicates and 4 treatment times (1, 2, 3 and 4 weeks) samples.

All jars were taken back to the Murdoch University laboratory where the number of killed insects / live insects in each container was recorded. The remaining control and treated wheat samples were incubated at 29±1°C and 70% r.h. Subsequent emerging adult insects were counted at 4 weeks to determine residual effect and protection of MU8.

### 2. Results

All two treated insect species of *Sitophilus oryzae* and *Rhyzopertha dominica* were complete control achieved at 200 g of MU8/tonne of wheat holding at laboratory conditions of 29±1°C, 70% r.h. and from week 1 to 4 treatment (Tables 21, 22, 23 and 24). Particularly, in comparison with untreated control, after 4 weeks incubated at 29±1°C and 70% r.h, the second generation has been emerged and adult population 2-4 times increased.

**Table 21. Week 1 (after 7 days)**

| | | | | | | | | |
|---|---|---|---|---|---|---|---|---|
| Sample | **RD1** | | **RD2** | | **RD3** | | **Control** | |
| | alive | dead | alive | dead | alive | dead | alive | dead |
| | 0 | 110 | 0 | 97 | 0 | 98 | 102 | 2 |
| Sample | **SO1** | | **SO2** | | **SO3** | | **Control** | |
| | alive | dead | alive | dead | alive | dead | alive | dead |
| | 0 | 112 | 0 | 103 | 0 | 100 | 97 | 3 |

**Table 22. Week 2 (after 14 days)**

| | | | | | | | | |
|---|---|---|---|---|---|---|---|---|
| Sample | **RD1** | | **RD2** | | **RD3** | | **Control** | |
| | alive | dead | alive | dead | alive | dead | alive | dead |
| | 0 | 95 | 0 | 97 | 0 | 98 | 89 | 15 |
| Sample | **SO1** | | **SO2** | | **SO3** | | **Control** | |
| | alive | dead | alive | dead | alive | dead | alive | dead |
| | 0 | 124 | 0 | 137 | 0 | 98 | 111 | 4 |

**Table 23. Week 3 (after 21 days)**

| | | | | | | | | |
|---|---|---|---|---|---|---|---|---|
| Sample | **RD1** | | **RD2** | | **RD3** | | **Control** | |
| | alive | dead | alive | dead | alive | dead | alive | dead |
| | 0 | 87 | 0 | 95 | 0 | 100 | 70 | 25 |
| Sample | **SO1** | | **SO2** | | **SO3** | | **Control** | |
| | alive | dead | alive | dead | alive | dead | alive | dead |
| | 0 | 102 | 0 | 113 | 0 | 93 | 55 | 47 |

**Table 24. Week 4 (after 28 days)**

| | | | | | | | | |
|---|---|---|---|---|---|---|---|---|
| Sample | **RD1** | | **RD2** | | **RD3** | | **Control** | |
| | alive | dead | alive | dead | alive | dead | alive | dead |
| | 0 | 98 | 0 | 104 | 0 | 106 | 45 | 63 |
| Sample | **SO1** | | **SO2** | | **SO3** | | **Control** | |
| | alive | dead | alive | dead | alive | dead | alive | dead |
| | 0 | 125 | 0 | 120 | 0 | 129 | 42 | 60 |

### References

Winks, R.G., 1982. The toxicity of phosphine to adults of Tribolium castaneum (Herbst): time as a response factor. Journal of Stored Products Research 18, 159-169.
Silhacek, D.L., Miller, G.L., 1972. Growth and development of the Indian meal moth, Plodia interpunctella (Lepidoptera: Phycitidae) under laboratory mass-rearing conditions. Annals of the Entomological Society of America 65, 1084-1087.

## Claims

1. A method of controlling insects in stored food comprising the step of contacting said insects with an effective amount of food grade synthetic amorphous silica with an average particle size of 50-200nm, as determined by scanning electron microscopy, and an effective surface area of 185-280m²/g wherein the food grade synthetic amorphous silica comprises at least 98% silica, by weight, and wherein said effective amount is up to 50mg/kg of the stored food and the synthetic amorphous silica is applied to the stored food.

2. A method according to claim 1 wherein the food grade synthetic amorphous silica is applied to the stored food by mixing it therewith.

3. A method according to claim 1 or 2 wherein the food grade synthetic amorphous silica is applied to the stored food by aerating it therethrough.

4. A method according to claim 1 wherein the synthetic amorphous silica is applied to the stored food suspended in a carrier fluid.

5. A method according to claim 1 wherein the effective amount is up to 25mg/kg of the stored food.

6. A method according to claim 5 wherein the effective amount is 10mg/kg of the stored food.

7. A method according to any one of the preceding claims wherein the food grade synthetic amorphous silica has an average particle size of 100-150nm.

8. A method according to any one of the preceding claims wherein the food grade synthetic amorphous silica comprises a dust or a powder.

9. A method according to any one of the preceding claims wherein the food grade synthetic amorphous silica comprises at least 99% silica, by weight.

10. A method according to any one of the preceding claims wherein the food grade synthetic amorphous silica comprises a silica gel or precipitated silica.

11. A method according to any one of the preceding claims wherein the food grade synthetic amorphous silica has an oil absorption value of 290-320 ml/100g.

12. A method according to any one of the preceding claims wherein the food grade synthetic amorphous silica is adapted to generate a net negative charge on a substance to which it is applied.

13. A method according to any one of the preceding claims wherein the food grade synthetic amorphous silica is adapted not to impact on the density of the stored food.

14. A method according to any one of the preceding claims wherein the insect is a beetle.

15. A method according to any one of the preceding claims wherein the insect is an arachnid.

16. A method according to any one of the preceding claims wherein the stored food is grain.

17. A food product comprising an insecticidally effective amount of a food grade synthetic amorphous silica with an average particle size of 50-200nm and an effective surface area of 185-280m²/g and wherein the food grade synthetic amorphous silica comprises at least 98% silica, by weight and wherein the insecticidally effective amount is up to 50mg/kg of the food product.

18. A food product according to claim 17 wherein the food grade synthetic amorphous silica comprises at least 99% silica, by weight.

19. A food product according to claim 17 or 18 comprising grain.

## Patentansprüche

1. Verfahren zur Bekämpfung von Insekten in gelagerten Lebensmitteln, das den Schritt des Kontaktierens der Insekten mit einer wirksamen Menge an lebensmittelechtem synthetischem amorphem Siliziumdioxid mit einer durchschnittlichen Partikelgröße von 50-200 nm, wie durch Rasterelektronenmikroskopie bestimmt, und einer effektiven Oberfläche von 185-280 m²/g umfasst, wobei das lebensmittelechte synthetische amorphe Siliziumdioxid mindestens 98 Gew.-% Siliziumdioxid umfasst und wobei die wirksame Menge bis zu 50 mg/kg des gelagerten Lebensmittels beträgt und das synthetische amorphe Siliziumdioxid auf das gelagerte Lebensmittel angewendet wird.

2. Verfahren nach Anspruch 1, wobei das lebensmittelechte synthetische amorphe Siliziumdioxid durch Mischen damit auf das gelagerte Lebensmittel angewendet wird.

3. Verfahren nach Anspruch 1 oder 2, wobei das lebensmittelechte synthetische amorphe Siliziumdioxid durch Durchlüften hindurch auf das gelagerte Lebensmittel angewendet wird.

4. Verfahren nach Anspruch 1, wobei das synthetische amorphe Siliziumdioxid auf das gelagerte Lebensmittel in einer Trägerflüssigkeit suspendiert angewendet wird.

5. Verfahren nach Anspruch 1, wobei die wirksame Menge bis zu 25 mg/kg des gelagerten Lebensmittels beträgt.

6. Verfahren nach Anspruch 5, wobei die wirksame Menge 10 mg/kg des gelagerten Lebensmittels beträgt.

7. Verfahren nach einem der vorstehenden Ansprüche, wobei das lebensmittelechte synthetische amorphe Siliziumdioxid eine durchschnittliche Partikelgröße von 100-150 nm aufweist.

8. Verfahren nach einem der vorstehenden Ansprüche, wobei das lebensmittelechte synthetische amorphe Siliziumdioxid einen Staub oder ein Pulver umfasst.

9. Verfahren nach einem der vorstehenden Ansprüche, wobei das lebensmittelechte synthetische amorphe Siliziumdioxid mindestens 99 Gew.-% Siliziumdioxid umfasst.

10. Verfahren nach einem der vorstehenden Ansprüche, wobei das lebensmittelechte synthetische amorphe Siliziumdioxid ein Silicagel oder gefälltes Siliziumdioxid umfasst.

11. Verfahren nach einem der vorstehenden Ansprüche, wobei das lebensmittelechte synthetische amorphe Siliziumoxid einen Ölabsorptionswert von 290-320 ml/100 g aufweist.

12. Verfahren nach einem der vorstehenden Ansprüche, wobei das lebensmittelechte synthetische amorphe Siliziumdioxid angepasst ist, um auf einer Substanz, auf die es angewendet wird, eine negative Nettoladung zu erzeugen.

13. Verfahren nach einem der vorstehenden Ansprüche, wobei das lebensmittelechte synthetische amorphe Siliziumdioxid angepasst ist, um die Dichte des gelagerten Lebensmittels nicht zu beeinflussen.

14. Verfahren nach einem der vorstehenden Ansprüche, wobei das Insekt ein Käfer ist.

15. Verfahren nach einem der vorstehenden Ansprüche, wobei das Insekt ein Spinnentier ist.

16. Verfahren nach einem der vorstehenden Ansprüche, wobei das gelagerte Lebensmittel Getreide ist.

17. Lebensmittelprodukt, das eine insektizid-wirksame Menge eines lebensmittelechten synthetischen amorphen Siliziumdioxids mit einer durchschnittlichen Partikelgröße von 50-200 nm und einer wirksamen Oberfläche von 185-280m²/g umfasst, und wobei das lebensmittelechte synthetische amorphe Siliziumdioxid mindestens 98 Gew.-% Siliziumdioxid umfasst und wobei die insektizid-wirksame Menge bis zu 50 mg/kg des Lebensmittels beträgt.

18. Lebensmittelprodukt nach Anspruch 17, wobei das lebensmittelechte synthetische amorphe Siliziumdioxid mindestens 99 Gew.-% Siliziumdioxid umfasst.

19. Lebensmittelprodukt nach Anspruch 17 oder 18, das Getreide umfasst.

## Revendications

1. Procédé de lutte contre des insectes dans des aliments stockés comprenant l'étape de mise en contact desdits insectes avec une quantité efficace de silice synthétique amorphe de qualité alimentaire présentant une taille de particule moyenne de 50-200 nm, telle que déterminée par microscopie électronique à balayage, et une surface efficace de 185-280 m²/g, dans lequel la silice synthétique amorphe de qualité alimentaire comprend au moins 98 % de silice, en poids, et dans lequel ladite quantité efficace peut atteindre 50 mg/kg des aliments stockés et la silice synthétique amorphe est appliquée aux aliments stockés.

2. Procédé selon la revendication 1, dans lequel la silice synthétique amorphe de qualité alimentaire est appliquée aux aliments stockés en la mélangeant avec ceux-ci.

3. Procédé selon la revendication 1 ou 2, dans lequel la silice synthétique amorphe de qualité alimentaire est appliquée aux aliments stockés en la ventilant à travers ceux-ci.

4. Procédé selon la revendication 1, dans lequel la silice synthétique amorphe est appliquée aux aliments stockés en suspension dans un fluide porteur.

5. Procédé selon la revendication 1, dans lequel la quantité efficace peut atteindre 25 mg/kg des aliments stockés.

6. Procédé selon la revendication 5, dans lequel la quantité efficace est 10 mg/kg des aliments stockés.

7. Procédé selon l'une quelconque des revendications précédentes, dans lequel la silice synthétique amorphe de qualité alimentaire présente une taille de particule moyenne de 100-150 nm.

8. Procédé selon l'une quelconque des revendications précédentes, dans lequel la silice synthétique amorphe de qualité alimentaire comprend une poussière ou une poudre.

9. Procédé selon l'une quelconque des revendications précédentes, dans lequel la silice synthétique amorphe de qualité alimentaire comprend au moins 99 % de silice, en poids.

10. Procédé selon l'une quelconque des revendications précédentes, dans lequel la silice synthétique amorphe de qualité alimentaire comprend un gel de silice ou de la silice précipitée.

11. Procédé selon l'une quelconque des revendications précédentes, dans lequel la silice synthétique amorphe de qualité alimentaire présente une valeur d'absorption d'huile de 290-320 ml/100 g.

12. Procédé selon l'une quelconque des revendications précédentes, dans lequel la silice synthétique amorphe de qualité alimentaire est conçue pour générer une charge négative nette sur une substance à laquelle elle est appliquée.

13. Procédé selon l'une quelconque des revendications précédentes, dans lequel la silice synthétique amorphe de qualité alimentaire est conçue pour ne pas affecter la densité des aliments stockés.

14. Procédé selon l'une quelconque des revendications précédentes, dans lequel l'insecte est un coléoptère.

15. Procédé selon l'une quelconque des revendications précédentes, dans lequel l'insecte est un arachnide.

16. Procédé selon l'une quelconque des revendications précédentes, dans lequel l'aliment stocké est une céréale.

17. Produit alimentaire comprenant une quantité efficace sur le plan insecticide de silice synthétique amorphe de qualité alimentaire présentant une taille de particule moyenne de 50-200 nm et une surface efficace de 185-280 m²/g et dans lequel la silice synthétique amorphe de qualité alimentaire comprend au moins 98 % de silice, en poids et dans lequel la quantité efficace sur le plan insecticide peut atteindre 50 mg/kg du produit alimentaire.

18. Produit alimentaire selon la revendication 17, dans lequel la silice synthétique amorphe de qualité alimentaire comprend au moins 99 % de silice, en poids.

19. Produit alimentaire selon la revendication 17 ou 18 comprenant une céréale.
